(19) Europäisches Patentamt

European Patent Office

Office européen des brevets

(11) Veröffentlichungsnummer: **0 268 294 B1**

(12) **EUROPÄISCHE PATENTSCHRIFT**

(45) Veröffentlichungstag der Patentschrift: **04.08.93**

(21) Anmeldenummer: **87117074.2**

(22) Anmeldetag: **19.11.87**

(51) Int. Cl.5: **C08F 2/02**, C08F 255/02, C09J 4/00, C08F 8/44, //(C08F255/02,222:06)

(54) **Peroxidfreie Pfropfung von Homo- bzw. Copolymerisaten des Ethylens mit Dichten gleich oder grösser als 0,930 g/m3 und Verwendung der Pfropfcopolymeren zur Herstellung von Ionomeren oder Haftvermittlern.**

(30) Priorität: **20.11.86 DE 3639564**

(43) Veröffentlichungstag der Anmeldung:
**25.05.88 Patentblatt 88/21**

(45) Bekanntmachung des Hinweises auf die
Patenterteilung:
**04.08.93 Patentblatt 93/31**

(84) Benannte Vertragsstaaten:
**AT BE DE FR GB IT NL**

(56) Entgegenhaltungen:
**FR-A- 1 322 448**
**FR-A- 1 393 730**
**FR-A- 2 550 656**
**US-A- 4 026 967**
**US-A- 4 087 588**

**CHEMICAL ABSTRACTS, Band 89, Nr. 22, November 1978, Seite 44, Zusammenfassung Nr. 180990s, Columbus, Ohio, US**

(73) Patentinhaber: **BASF Aktiengesellschaft**
**Carl-Bosch-Strasse 38**
**W-6700 Ludwigshafen(DE)**

(72) Erfinder: **Hasenbein, Norbert, Dr.**
**Neuoettinger Strasse 4**
**W-6716 Dirmstein(DE)**
Erfinder: **Bauer, Peter**
**Erich-Kaestner-Strasse 13**
**W-6700 Ludwigshafen(DE)**
Erfinder: **Schlemmer, Lothar**
**Duisbergstrasse 1a**
**W-6701 Maxdorf(DE)**
Erfinder: **Hauss, Alfred Friedrich, Dr.**
**Osloer Weg 6**
**W-6700 Ludwigshafen(DE)**
Erfinder: **Gropper, Hans, Dr.**
**Sternstrasse 155**
**W-6700 Ludwigshafen(DE)**
Erfinder: **Ohlinger, Rainer, Dr.**
**Ziegelhaeuser Landstrasse 31**
**W-6900 Heidelberg(DE)**

**EP 0 268 294 B1**

**Beschreibung**

Die Erfindung betrifft ein Verfahren zur peroxidfreien Pfropfung von ethylenisch ungesättigten Carbonsäuren, Carbonsäureanhydriden und/oder deren Derivaten auf Ethylenpolymerisate mit Dichten gleich oder größer als 0,930 g/cm$^3$.

Pfropfcopolymere können dadurch hergestellt werden, daß man die Basismaterialien mit Peroxiden umsetzt oder starken mechanischen Beanspruchungen unterwirft, dadurch Radikale erzeugt und sie mit geeigneten Monomeren in Kontakt bringt. Nach dem britischen Patent 679 562 können die Radikale durch Hochgeschwindigkeitsrührer, Schütteln, Mahlen, Kneten, Ultraschallschwingungen oder Passieren von Filtern bzw. Kapillarrohren mit hohen Lineargeschwindigkeiten erzeugt werden. Dadurch erfolgt ein Abbau des Polymeren, wobei reaktive Radikale gebildet werden, an denen die Pfropfreaktion stattfinden kann. Wenn man die Pfropfreaktion mit Polyethylen als Basispolymerem und Maleinsäureanhydrid als zu pfropfendem Monomeren im Scheibenextruder [vgl. Protassow et al., Plaste und Kautschuk, 23, (3), (1976), 185-187] durchführt, sind Vernetzungsreaktionen festzustellen.

Gemäß derselben Literaturstelle erhält man wegen des Mangels an Initiatoren überhaupt keine Reaktion, wenn man für die Umsetzung übliche Extruder verwenden will.

In üblichen Extrudern kann jedoch auch eine Pfropfung durchgeführt werden, wenn man dem Reaktionsgemisch geeignete Initiatoren wie organische Peroxide zusetzt und die Umsetzung in einer z.B. in den US-Patenten 3 862 265, 3 953 655 und 4 001 172 beschriebenen speziellen Reaktionszone durchführt. Dabei erfolgt jedoch wiederum ein Polymerabbau, und im Falle des Polyethylens als Basispolymerem besteht außerdem die Gefahr der Vernetzung.

Um einen Abbau des Polymeren zu verhindern, sind spezielle verfahrenstechnische Maßnahmen notwendig, wie sie in den US-Patenten 3 177 269, 3 177 270 sowie 3 270 090 beschrieben sind.

Wenn Maleinsäureanhydrid als zu pfropfende ungesättigte Verbindung in einem Konzentrationsbereich von 0,05l-1,26 Gew.%, bezogen auf das Basispolymer Polyethylen eingesetzt wird, findet nach dem US-Patent 4 147 740 ein praktisch vollständiger Umsatz des Maleinsäureanhydrids statt. Ein vollständiger Umsatz des Maleinsäureanhydrids ist aufgrund der hohen Toxizität des freien ungebundenen Maleinsäureanhydrids besonders vorteilhaft.

Wichtige Voraussetzung für den vollständigen Maleinsäureanhydrideinbau ist gemäß US-Patent 4 147 740 der Einsatz von Peroxiden, und zwar muß das Verhältnis der Peroxidkonzentration zur Maleinsäureanhydridkonzentration um so größer werden, je geringer die Maleinsäureanhydridkonzentration ist. Bei einer Maleinsäureanhydridkonzentration von 1,26 Gew.%, bezogen auf das Basispolymere, reicht noch eine Peroxidkonzentration aus, die ca. 1/10 der Maleinsäureanhydridkonzentration entspricht; bei niedrigen Maleinsäureanhydridkonzentrationen reicht nicht einmal ein Peroxideinsatz aus, der der Maleinsäureanhydridkonzentration entspricht, um einen vollständigen Umsatz des Maleinsäureanhydrids zu erreichen. Diesen erreicht man erst bei einem fünffachen Peroxidüberschuß.

Der Einsatz so hoher Peroxidkonzentrationen führt zu unerwünschten Vernetzungen, was die Fließfähigkeit und Verarbeitbarkeit der Pfropfpolymeren herabsetzt. Die durch den Peroxideinsatz bedingten unerwünschten Abbau- und Vernetzungsreaktionen lassen sich häufig nur durch besondere verfahrenstechnische Maßnahmen, wie sie z.B. in den US-Patenten 3 177 269, 3 177 270 sowie 3 270 090 beschrieben sind, zurückzudrängen. Diese schränken die Verfahrensflexibilität ein.

Außerdem werden die Polymeren durch den Peroxideinsatz in ihrer Farbe und ihrem Geruch beeinträchtigt. Ferner nimmt die Haftfestigkeit gegenüber polaren Substanzen, wie zum Beispiel Metallen, ab. Schließlich ist der Einsatz von Peroxiden sicherheitstechnisch grundsätzlich bedenklich.

Nach dem Stand der Technik ist jedoch ein Einsatz von Peroxiden unbedingt notwendig, um überhaupt eine Pfropfreaktion zu erreichen. Gerade bei niedrigen Maleinsäureanhydridkonzentrationen, die in einen technisch interessanten Bereich fallen, sind relativ hohe Peroxidkonzentrationen erforderlich, um einen vollständigen Umsatz des Maleinsäureanhydrids zu erreichen. Vollständige Maleinsäureanhydridumsätze sind aber aus wirtschaftlichen und noch viel mehr aus arbeitshygienischen Gründen wegen der hohen Toxizität des Maleinsäureanhydrids wünschenswert.

Wenn man hingegen Radikale rein thermisch, also ohne Peroxideinsatz erzeugt, finden Abbaureaktionen statt, die die Viskosität der Basispolymeren erniedrigen. Diese abgebauten Polymeren zeigen eine schlechte Haftung auf Metallen, auch wenn die Polymeren mit Maleinsäureanhydrid unter Ausnutzung der thermisch erzeugten Radikale gepfropft werden.

Werden die für die Pfropfreaktion benötigten Radikale mechanochemisch, z.B. im Scheibenextruder, erzeugt, wird das Basispolymere ebenfalls stark abgebaut; daneben können in Anwesenheit von Maleinsäureanhydrid auch noch Vernetzungsreaktionen auftreten.

2

Somit bestand die Aufgabe, ein Verfahren für die peroxidfreie Pfropfung von ungesättigten Carbonsäuren, Anhydriden und deren Derivaten zu finden, bei dem kein Abbau und keine Vernetzung des Ethylenpolymeren stattfindet. Gleichzeitig sollte der Umsatz der Monomeren möglichst vollständig sein.

Diese Aufgaben wurden durch Verfahren gemäß Patentansprüchen 1 bis 4 gelöst.

Als ethylenisch ungesättigte Carbonsäuren, Carbonsäureanhydride und/oder deren Derivate kommen insbesondere die üblichen Verbindungen wie Maleinsäure, Fumarsäure, Itaconsäure, Acrylsäure, Acrylsäureanhydrid, Methacrylsäure, Crotonsäure, Maleinsäureanhydrid, Itaconsäureanhydrid, in Betracht. Bevorzugte Verbindungen sind Maleinsäure, Fumarsäure und insbesondere Maleinsäureanhydrid.

Unter Homo- bzw. Copolymerisaten des Ethylens mit Dichten gleich oder größer als 0,930 g/cm$^3$ werden insbesondere Polyethylen hoher Dichte (HDPE), Ethylen-Vinylacetat-Copolymerisate hoher Dichte, Ethylen-Acrylsäureester-Copolymerisate hoher Dichte sowie das Polyethylen mittlerer Dichte (MDPE) verstanden. Die Dichten wurden nach DIN 53 479 bestimmt; sie liegen bevorzugt im Bereich von 0,930 bis 0,966 g/cm$^3$, insbesonders 0,935 bis 0,965 g/cm$^3$.

Nach erfindungsgemäßem Verfahren werden die zu pfropfenden Monomeren im Konzentrationsbereich von 0,01 bis 0,25 Gew.%, bezogen auf das Ethylenpolymerisat, eingesetzt, dem bei Temperaturen von mindestens 140°C aufgeschmolzenen Ethylenpolymeren zugemischt und die Pfropfreaktion wird im Temperaturbereich von 210 bis 300°C, z.B. in üblichen Extrudern bei Drücken von 1 bis 500 bar, in Abwesenheit eines radikalisch zerfallenden Initiators durchgeführt.

Bevorzugt wird im Konzentrationsbereich von 0,05 bis 0,25, insbesondere 0,05 bis 0,20 Gew.%, gepfropft. Bevorzugt beträgt der Temperaturbereich 210 bis 280°C, insbesondere 210 bis 260°C.

Bevorzugt ist auch ein Verfahren, bei dem das zu pfropfende Monomere im flüssigen Zustand zugemischt wird.

Die peroxidfreie Pfropfung der ungesättigten Carbonsäuren, Anhydride und deren Derivate wurde auf einem handelsüblichen Zweischneckenextruder, etwa ZDSK 53 der Firma Werner & Pfleiderer, durchgeführt. Es können aber auch andere nach dem Stand der Technik bekannte Reaktoren, z.B. Brabender, eingesetzt werden. Das Ethylenpolymere und erforderlichenfalls auch das zu pfropfende Monomere wurden auf mindestens 140°C aufgeschmolzen, innig vermischt und dann bei erhöhter Temperatur, 210 bis 300°C, vorzugsweise 210 bis 280°C, noch mehr bevorzugt 210 bis 260°C, umgesetzt. Dabei ist es unerheblich, ob das zu pfropfende Monomere vor oder nach dem Aufschmelzen des Ethylenpolymeren in den Reaktor gegeben wird. Die zu pfropfenden Monomeren wurden in einem Konzentrationsbereich von 0,01 bis 0,5, vorzugsweise 0,05 bis 0,25 Gew.%, bezogen auf das Ethylenpolymere, eingesetzt. Dabei wurde festgestellt, daß die Ausbeuten an gepfropftem Monomeren um so höher sind, je geringer die Konzentrationen des zu pfropfenden Monomeren sind. Dieser Befund ist überraschend, da es nach dem US-Patent 4 147 740 umso schwieriger werden sollte, hohe Pfropfausbeuten zu erzielen, je geringer die Konzentration an zu pfropfendem Monomeren sind. Dies zeigt, daß sich die dieser Erfindung zugrundeliegende Reaktion völlig von solchen Pfropfungen unterscheidet, die mit Peroxideinsatz durchgeführt werden. Nach bevorzugter Verfahrensweise wird das zu pfropfende Monomere dem Ethylenpolymeren im flüssigen Zustand zugemischt. Hierzu kann es zuvor aufgeschmolzen werden.

Das erfindungsgemäße Verfahren gewährleistet einerseits einen hohen Umsatz des zu pfropfenden Monomeren und führt andererseits beim Basispolymeren weder zu einer nennenswerten Vernetzung noch zu einem Abbau.

Die erfindungsgemäß hergestellten Pfropfcopolymeren eignen sich für die Hohlkörperherstellung, Beschichtungs- und Coextrusion, Pulverbeschichtung etc. Aufgrund ihres geringen Restmonomergehaltes eignen sie sich auch für den Lebensmittelsektor.

Die Produkte haben eine hohe Haftfestigkeit auf Polyamid, Polyvinylalkohol, Polystyrol, Polycarbonat, Polyolefinen, Epoxidharzen und auch auf Metallen, wie z.B. Aluminium und Eisen.

Dabei ist die Haftfestigkeit dieser ohne Peroxideinsatz hergestellten Pfropfcopolymeren höher als die von Produkten, die mit Peroxideinsatz gepfropft wurden. Die Fließfähigkeit wird bei den erfindungsgemäß hergestellten Produkten im Vergleich zum Basispolymeren kaum herabgesetzt. Anders als die mit Peroxideinsatz hergestellten Pfropfcopolymeren lassen sich die ohne Peroxideinsatz hergestellten Produkte leicht verarbeiten. Die aus diesen Produkten hergestellten Folien sind wesentlich stippenärmer als solche Folien, die von Pfropfprodukten erhalten werden, die mit Peroxideinsatz hergestellt werden. Die aus der peroxidfreien Pfropfung erhaltenen Produkte sind zudem völlig farb- und geruchlos.

Die Verwendung von analogen Pfropfcopolymeren, die aus Ethylenpolymerisaten und aufgepfropften ungesättigten Carbonsäuren oder Carbonsäureanhydriden bestehen, zur Herstellung von Haftvermittlern und Klebstoffen ist an sich bekannt und z.B. in den Druckschriften GB-Patent 2 081 723 und US-Patent 4 487 885 beschrieben. Auch die Verwendung analoger Pfropfcopolymerer zur Herstellung von Ionomeren ist aus der Literatur so bekannt, daß sich eine weitere Erläuterung an dieser Stelle erübrigt (vgl. z.B. US-Patente 3 264 272 oder 3 437 718). Bei der Herstellung der Ionomeren werden die freien Carboxylgruppen des erfindungsgemäß erhaltenen Pfropfcopolymeren mit anorganischen Basen oder Salzen zu den entsprechenden Salzen umgesetzt. Geeignet sind vor allem Alkaliverbindungen sowie Salze der Alkalimetalle, Erdalkalimetalle oder des Zinks mit organischen Säuren.

Beispiel 1

100 Gew.-Teile MDPE (Copolymeres aus Ethylen 97,5 Gew.-% und Buten 2,5 Gew.-%; Schmelzindex = 4,3 g/10 min, bestimmt bei allen Versuchen nach ASTM-D-1238-65T bei einer Temperatur von 190°C und einem Auflagegewicht von 2,16 kg; Dichte = 0,9358 g/cm³, bestimmt bei allen Versuchen nach DIN 53 479) wurden bei 140°C in einem Zweiwellenextruder, ZDSK 53 von Werner & Pfleiderer, aufgeschmolzen. In die Schmelze wurden 0,25 Gew.-Teile Maleinsäureanhydrid flüssig eingepumpt, mit dem Basispolymeren vermischt und bei 260°C umgesetzt. Nicht umgesetztes Maleinsäureanhydrid wurde über eine Vakuumentgasung aus der Polymerschmelze entfernt.

Die mittlere Verweilzeit der Pfropfkomponenten im Extruder betrug 2 min., der Polymerdurchsatz 10 kg/h bei 150 Upm.

Die Ausbeute an gepfropftem Maleinsäureanhydrid betrug 99 %. Das gepfropfte Polymere (Schmelzindex = 3,5 g/10 min) hat eine verbesserte Haftung auf polaren Substanzen, wie z.B. Epoxidharzen oder Metallen, und ist zudem völlig farb- und geruchlos.

Beispiel 2

100 Gew.-Teile MDPE (Copolymeres aus Ethylen 97,5 Gew.-% und Buten 2,5 Gew.-%; Schmelzindex = 4,3 g/10 min; Dichte = 0,9358 g/cm³) wurden bei 140°C in einem Zweiwellenextruder, ZDSK 53 von Werner & Pfleiderer, aufgeschmolzen. In die Schmelze wurden 0,15 Gew.-Teile Maleinsäureanhydrid flüssig eingepumpt, mit dem Basispolymeren vermischt und bei 220°C umgesetzt. Nicht umgesetztes Maleinsäureanhydrid wurde über eine Vakuumentgasung aus der Polymerschmelze entfernt.

Die mittlere Verweilzeit der Pfropfkomponenten im Extruder betrug 2 min., der Polymerdurchsatz 10 kg/h bei 150 Upm.

Die Ausbeute an gepfropftem Maleinsäureanhydrid betrug 99 %. Das gepfropfte Polymere (Schmelzindex = 3,9 g/10 min) hat eine verbesserte Haftung auf polaren Substanzen, wie z.B. Epoxidharzen oder Metallen, und ist zudem völlig farb- und geruchlos.

Beispiel 3

100 Gew.-Teile MDPE (Copolymers aus Ethylen 97,5 Gew.-% und Buten 2,5 Gew.-%; Schmelzindex = 4,3 g/10 min; Dichte = 0,9358 g/cm³) wurden bei 140°C in einem Zweiwellenextruder, ZDSK 53 von Werner & Pfleiderer, aufgeschmolzen. In die Schmelze wurden 0,10 Gew.-Teile Maleinsäureanhydrid flüssig eingepumpt, mit dem Basispolymeren vermischt und bei 220°C umgesetzt. Nicht umgesetztes Maleinsäureanhydrid wurde über eine Vakuumentgasung aus der Polymerschmelze entfernt.

Die mittlere Verweilzeit der Pfropfkomponenten im Extruder betrug 2 min., der Polymerdurchsatz 10 kg/h bei 150 Upm.

Die Ausbeute an gepfropftem Maleinsäureanhydrid betrug 99 %. Das gepfropfte Polymere (Schmelzindex = 3,8 g/10 min) hat eine verbesserte Haftung auf polaren Substanzen, wie z.B. Epoxidharzen oder Metallen, und ist zudem völlig farb- und geruchlos.

Beispiel 4

100 Gew.-Teile MDPE (Copolymeres aus Ethylen 97,5 Gew.-% und Buten 2,5 Gew.-%; Schmelzindex = 4,3 g/10 min; Dichte = 0,9358 g/cm³) wurden bei 140°C in einem Zweiwellenextruder, ZDSK 53 von Werner & Pfleiderer, aufgeschmolzen. In die Schmelze wurden 0,05 Gew.-Teile Maleinsäureanhydrid flüssig eingepumpt, mit dem Basispolymeren vermischt und bei 220°C umgesetzt. Nicht umgesetztes Maleinsäureanhydrid wurde über eine Vakuumentgasung aus der Polymerschmelze entfernt.

Die mittlere Verweilzeit der Pfropfkomponenten im Extruder betrug 2 min., der Polymerdurchsatz 10 kg/h bei 150 Upm.

Die Ausbeute an gepfropftem Maleinsäureanhydrid betrug 99 %. Das gepfropfte Polymere (Schmelzindex = 3,8 g/10 min) hat eine verbesserte Haftung auf polaren Substanzen, wie z.B. Epoxidharzen oder Metallen, und ist zudem völlig farb- und geruchlos.

EP 0 268 294 B1

Beispiel 5 und Vergleichsversuch

Unter den gleichen Bedingungen wie in Beispiel 1 wurde das MDPE mit Maleinsäureanhydrid gepfropft mit der Abänderung, daß das Maleinsäureanhydrid mit 0,025 Gew.-Teilen Dicumylperoxid vermischt wurde. Von den erhaltenen Produkten wurden 2,7 mm starke Eisen/Haftvermittler/MDPE-Verbundplatten gepreßt und die Schälfestigkeit nach einem Test in Anlehnung an DIN 30670 bestimmt. Der Tabelle 1 ist zu entnehmen, daß das ohne Peroxid gepfropfte Produkt (Beispiel 5) eine sehr viel höhere Haftfestigkeit besitzt als das Produkt, das mit Peroxideinsatz (Vergleichsversuch) gepfropft wurde.

```
Tabelle 1
```

| | Dicumyl-peroxid [ Gew.%] | Ausbeute gepfropftes Maleinsäure-anhydrid [Gew.%] | Produkt Schmelz-index 2,16 [g/10min] | Haftung Verbund-platte N/2 cm Streifen-breite | Farbe | Geruch |
|---|---|---|---|---|---|---|
| Ver-gleichs-versuch | 0,025 | 97 | 1,1 | 70 | gelb | stark nach Zer-setzungsproduk-ten d.Peroxids |
| Bei-spiel 5 | - | 99 | 3,5 | 150 | farblos | keiner |

Das gemäß Vergleichsversuch erhaltene Produkt läßt sich schlecht verarbeiten (starke Absenkung des Schmelzindexes), ist gelb gefärbt und riecht stark nach den Zersetzungsprodukten des Peroxids. Aus diesem Produkt hergestellte Folien sind sehr stippenhaltig. Nach Beispiel 5 hergestellte Produkte haben diese Nachteile nicht.

Beispiel 6 und Vergleichsversuche

Unter den gleichen Bedingungen wie in Beispiel 1 wurde das MDPE mit Maleinsäureanhydrid gepfropft mit der Abänderung, daß 0,4, 0,75 bzw. 1,25 Gew.-Teile Maleinsäureanhydrid zur Pfropfung eingesetzt wurden. Der Tabelle 2 ist zu entnehmen, daß die Pfropfausbeuten mit zunehmender Maleinsäureanhydrid-konzentration schlechter werden.

```
Tabelle 2
```

| | eingesetzte Maleinsäure-anhydrid-konzentration [Gew.-%] | Produkt Schmelzindex 2,16 [g/10 min] | Ausbeute gepfropftes Maleinsäure-anhydrid [%] |
|---|---|---|---|
| Vergleichsversuch A | 0,4 | 3,6 | 80 |
| Vergleichsversuch B | 0,75 | 3,5 | 50 |
| Vergleichsversuch C | 1,25 | 3,7 | 27 |
| Beispiel 6 | 0,25 | 3,5 | 99 |

Schlechte Ausbeuten an gepfropftem Maleinsäureanhydrid sind aber sowohl aus wirtschaftlichen als auch aus arbeitshygienischen Gründen unerwünscht.

**Patentansprüche**

1. Verfahren zum Pfropfen von ethylenisch ungesättigten Carbonsäuren, Carbonsäureanhydriden und/oder deren Derivaten auf Homo- bzw. Copolymerisate des Ethylens mit Dichten gleich oder größer als 0,930

5

g/cm$^3$ in üblichen Extrudern oder Mischern bei Drücken von 1 bis 500 bar in Abwesenheit eines radikalisch zerfallenden Katalysators, dadurch gekennzeichnet, daß das zu pfropfende Monomere im Konzentrationsbereich von 0,01 bis 0,25 Gew.-%, bezogen auf das Ethylenpolymerisat, dem bei Temperaturen von mindestens 140°C aufgeschmolzenen Ethylenpolymerisat zugemischt und die Pfropfreaktion im Temperaturbereich von 210 bis 300°C bis zum vollständigen oder möglichst vollständigen Umsatz des Monomeren durchgeführt wird.

2. Das Verfahren nach Anspruch 1, dadurch gekennzeichnet, daß das Propfmonomere im flüssigen Zustand zugemischt wird.

3. Das Verfahren nach Anspruch 1, dadurch gekennzeichnet, daß der Konzentrationsbereich des Pfropfmonomeren 0,05 bis 0,25 Gew.-% beträgt.

4. Das Verfahren nach Anspruch 1, dadurch gekennzeichnet, daß das Pfropfmonomere Maleinsäureanhydrid ist.

5. Verwendung der Pfropfcopolymerisate, erhalten nach dem Verfahren gemäß Anspruch 1, zur Herstellung von Ionomeren.

6. Verwendung der Pfropfcopolymerisate, erhalten nach dem Verfahren gemäß Anspruch 1, zur Herstellung von Haftvermittlern.

**Claims**

1. A process for grafting ethylenically unsaturated carboxylic acids, carboxylic anhydrides and/or their derivatives to a homopolymer or copolymer of ethylene having a density equal to or greater than 0.930 g/cm$^3$ in a conventional extruder or mixer under from 1 to 500 bar in the absence of a free radical catalyst, wherein the monomer to be grafted is mixed, in a concentration of from 0.01 to 0.25% by weight, based on the ethylene polymer, with the ethylene polymer which has been melted at 140°C or higher, and the grafting reaction is carried out at from 210 to 300°C until conversion of the monomer is complete or is as complete as possible.

2. A process as claimed in claim 1, wherein the graft monomer is admixed in the liquid state.

3. A process as claimed in claim 1, wherein the concentration of the graft monomer is from 0.05 to 0.25% by weight.

4. A process as claimed in claim 1, wherein the graft monomer is maleic anhydride.

5. The use of a graft copolymer, obtained by the process as claimed in claim 1, for preparing ionomers.

6. The use of a graft copolymer, obtained by the process as claimed in claim 1, for preparing adhesion promoters.

**Revendications**

1. Procédé de greffage d'anhydrides d'acides carboxyliques, d'acides carboxyliques, éthyléniquement insaturés et/ou de leurs dérivés sur des homopolymères ou des copolymères de l'éthylène avec des masses spécifiques égales ou supérieures à 0,930 g/cm$^3$ dans des extrudeuses ou des mélangeurs usuels, à des pressions de 1 à 500 bars, en l'absence d'un catalyseur à décomposition radicalaire, caractérisé en ce que l'on ajoute en mélangeant le monomère à greffer dans une plage de concentrations de 0,01 à 0,25% en poids, par rapport au polymère de l'éthylène, au polymère de l'éthylène fondu à des températures d'au moins 140°C et on entreprend la réaction de greffage dans une plage de temépratures de 210 à 300°C jusqu'à la conversion complète ou la plus complète possible du monomère.

2. Procédé suivant la revendication 1, caractérisé en ce que l'on ajoute le monomère de greffage sous mélange à l'état liquide.

**3.** Procédé suivant la revendication 1, caractérisé en ce que la plage des concentrations du monomère de greffage varie de 0,05 à 0,25% en poids.

**4.** Procédé suivant la revendication 1, caractérisé en ce que le monomère de greffage est l'anhydride maléique.

**5.** Utilisation des copolymères de greffage, obtenus par mise en oeuvre du procédé suivant la revendication 1, en vue de la préparation d'ionomères.

**6.** Utilisation des copolymères de greffage, obtenus par mise en oeuvre du procédé suivant la revendication 1, en vue de la préparation d'agents conférant de l'adhésivité.